(19)

Europäisches
Patentamt
European
Patent Office
Office européen
des brevets

(11)  **EP 2 571 259 A1**

(12)  **EUROPEAN PATENT APPLICATION**

(43) Date of publication:
**20.03.2013 Bulletin 2013/12**

(51) Int Cl.:
*H04N 7/14* (2006.01)          *H04N 5/232* (2006.01)
*H04M 1/02* (2006.01)          *H04R 1/00* (2006.01)

(21) Application number: **12180216.9**

(22) Date of filing: **13.08.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **13.09.2011   JP 2011199052**

(71) Applicant: **Sony Corporation
Tokyo 108-0075 (JP)**

(72) Inventors:
• **Yohei, Sakuraba
Tokyo (JP)**

• **Yasuhiko, Kato
Tokyo (JP)**
• **Nobuyuki, Kihara
Tokyo (JP)**
• **Takeshi, Yamaguchi
Tokyo (JP)**

(74) Representative: **Beder, Jens
Mitscherlich & Partner
Sonnenstraße 33
80331 München (DE)**

(54)  **Signal processing apparatus, signal processing method, and program**

(57)     A signal processing apparatus includes: an audio separator that separates audios into a first audio and a second audio using two inputted audio signals; an audio combiner that combines the first audio with the second audio based on proportions of the audios separated by the audio separator; and an image combiner that combines a first image corresponding to the first audio with a second image corresponding to the second audio based on the proportions of the audios separated by the audio separator.

*FIG.1*

EP 2 571 259 A1

**Description**

FIELD

The present disclosure relates to a signal processing apparatus, a signal processing method, and a program, and particularly to a signal processing apparatus, a signal processing method, and a program capable of readily creating a content formed of two images and two audios combined at coordinated proportions.

BACKGROUND

A video conference system including a plurality of microphones and a plurality of cameras for capturing images of an entire conference and each speaker has been proposed (see JP-A-2007-274462).

In the video conference system, audios obtained from the plurality of microphones are used to detect the direction of a speaker, and an audio signal is produced based on the direction of the speaker and sent to the other end, whereby attendees on the other end can hear the audio from the direction of the speaker. Further, data on the detected direction is sent along with image and audio data to the other end, whereby an entire conference image is superimposed on an image of the speaker present in the detected direction displayed on the other end.

SUMMARY

In addition to the proposal described in JP-A-2007-274462, which relates to a video conference system, mobile information terminals equipped with a plurality of cameras and microphones have come out on the market in recent years. A mobile information terminal of this type, which is equipped with a plurality of cameras and microphones, has, however, been used only as a camera or a microphone alone.

Thus, it is desirable to readily create a content formed of two images and two audios combined at coordinated proportions.

Various aspects and features of the invention are defined in the appended claims.

A signal processing apparatus according to an embodiment of the present disclosure includes an audio separator that separates audios into a first audio and a second audio using two inputted audio signals, an audio combiner that combines the first audio with the second audio based on proportions of the audios separated by the audio separator, and an image combiner that combines a first image corresponding to the first audio with a second image corresponding to the second audio based on the proportions of the audios separated by the audio separator.

The signal processing apparatus may further include a first microphone that inputs one of the two audio signals that contains a greater amount of the first audio, a second microphone that inputs the other one of the two audio signals that contains a greater amount of the second audio, a first camera that inputs a signal carrying the first image, and a second camera that inputs a signal carrying the second image.

The first microphone and the first camera may be disposed on one surface of an enclosure, and the second microphone and the second camera can be disposed on a surface different from the one surface of the enclosure.

The signal processing apparatus may further include an operation input unit that inputs proportions of the first image and the second image in accordance with user operation and a proportion changer that changes the proportions of the separated audios in accordance with the proportions inputted by the operation input unit. The image combiner can combine the first image with the second image based on the proportions changed by the proportion changer, and the audio combiner can combine the first audio with the second audio based on the proportions changed by the proportion changer.

The signal processing apparatus may further include a proportion calculator that calculates the proportions of the audios separated by the audio separator.

The enclosure may be so shaped that the signal processing apparatus is portable by a user.

The signal processing apparatus may further include a display section provided on the one surface.

The signal processing apparatus may further include a transmitter that transmits data on the audio combined by the audio combiner and data on the image combined by the image combiner to a server.

A signal processing method according another embodiment of the present disclosure includes separating audios into a first audio and a second audio using two inputted audio signals, combining the first audio with the second audio based on proportions of the separated audios, and combining a first image corresponding to the first audio with a second image corresponding to the second audio based on the proportions of the separated audios.

A program according to still another embodiment of the present disclosure instructs a computer to function as an audio separator that separates audios into a first audio and a second audio using two inputted audio signals, an audio combiner that combines the first audio with the second audio based on proportions of the audios separated by the audio separator, and an image combiner that combines a first image corresponding to the first audio with a second image corresponding to the second audio based on the proportions of the audios separated by the audio separator.

A signal processing apparatus according to yet another embodiment of the present disclosure includes an audio separator that separates audios into a first audio and a second audio using two inputted audio signals, an operation input unit that inputs proportions of a first image corresponding to the first audio and a second image corresponding to the second audio in accordance with user operation, an image combiner that combines the first image with the second image based on the proportions inputted by the operation input unit, and an audio combiner that combines the first audio with the second audio based on the proportions inputted by the operation input unit.

The signal processing apparatus may further include a first microphone that inputs one of the two audio signals that contains a greater amount of the first audio, a second microphone that inputs the other one of the two audio signals that contains a greater amount of the second audio, a first camera that inputs a signal carrying the first image, and a second camera that inputs a signal carrying the second image.

The first microphone and the first camera may be disposed on one surface of an enclosure, and the second microphone and the second camera can be disposed on a surface different from the one surface of the enclosure.

The signal processing apparatus may further include a proportion changer that changes the proportions of the separated audios in accordance with the proportions inputted by the operation input unit. The image combiner can combine the first image with the second image based on the proportions changed by the proportion changer, and the audio combiner can combine the first audio with the second audio based on the proportions changed by the proportion changer.

The signal processing apparatus may further include a proportion calculator that calculates the proportions of the audios separated by the audio separator.

The enclosure may be so shaped that the signal processing apparatus is portable by a user.

The signal processing apparatus may further include a display section provided on the one surface.

The signal processing apparatus described may further include a transmitter that transmits data on the audio combined by the audio combiner and data on the image combined by the image combiner to a server.

A signal processing method according to still yet another embodiment of the present disclosure includes separating audios into a first audio and a second audio using two inputted audio signals, inputting proportions of a first image corresponding to the first audio and a second image corresponding to the second audio in accordance with user operation, combining the first image with the second image based on the inputted proportions, and combining the first audio with the second audio based on the inputted proportions.

A program according to further another embodiment of the present disclosure instructs a computer to function as an audio separator that separates audios into a first audio and a second audio using two inputted audio signals, an operation input unit that inputs proportions of a first image corresponding to the first audio and a second image corresponding to the second audio in accordance with user operation, an image combiner that combines the first image with the second image based on the proportions inputted by the operation input unit, and an audio combiner that combines the first audio with the second audio based on the proportions inputted by the operation input unit.

In one embodiment of the present disclosure, two inputted audio signals are used to separate the audios into a first audio and a second audio. The first audio is then combined with the second audio based on proportions of the separated audios, and a first image corresponding to the first audio is combined with a second image corresponding to the second audio based on the proportions of the separated audios.

In one embodiment of the present disclosure, two inputted audio signals are used to separate the audios into a first audio and a second audio. Proportions of a first image corresponding to the first audio and a second image corresponding to the second audio are inputted in accordance with user operation. The first image is then combined with the second image based on the inputted proportions, and the first audio is combined with the second audio based on the inputted proportions.

According to the embodiments of the present disclosure, a content formed of two images and two audios combined at coordinated proportions can be readily created.

BRIEF DESCRIPTION OF THE DRAWINGS

Embodiments of the invention will now be described with reference to the enclosed drawings throughout which like references denote like parts and in which

> Fig. 1 is an exterior view showing an example of the exterior configuration of a mobile terminal to which the present disclosure is applied;
> Fig. 2 is a block diagram showing an example of the internal configuration of the mobile terminal;
> Fig. 3 is a block diagram showing an example of the configuration of an image/audio combiner;
> Fig. 4 shows examples of an output image;
> Fig. 5 is a flowchart for describing processes carried out by the mobile terminal;

Fig. 6 is a block diagram showing another example of the internal configuration of the mobile terminal;
Fig. 7 is a flowchart for describing other processes carried out by the mobile terminal; and
Fig. 8 is a block diagram showing an example of the configuration of a computer.

DETAILED DESCRIPTION

Modes for carrying out the present disclosure (hereinafter referred to as embodiment) will be described below.

[Example of exterior configuration of mobile terminal]

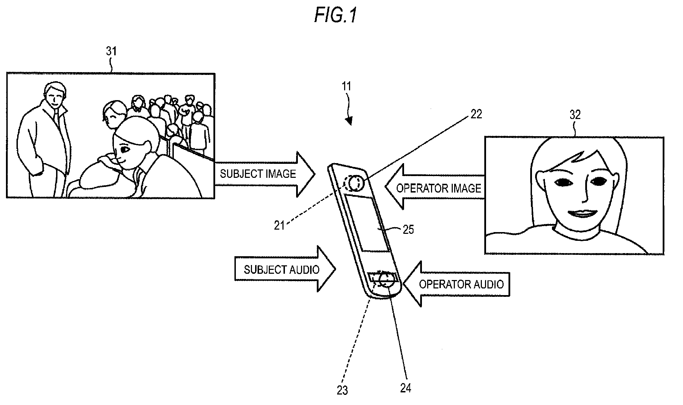

Fig. 1 shows an example of the exterior configuration of a mobile terminal to which the present disclosure is applied.
A mobile terminal 11 is, for example, a multifunctional mobile terminal that is a combination of a mobile phone and a mobile information terminal and excels in portability, such as what is called a smartphone. The mobile terminal 11 may alternatively be a tablet terminal or a mobile phone, or even a mobile PC (personal computer).
The mobile terminal 11 includes two cameras, a subject camera 21 and an operator camera 22; two microphones, a subject microphone 23 and an operator microphone 24; and a display section 25. The subject camera 21 corresponds to the subject microphone 23, and the operator camera 22 corresponds to the operator microphone 24. That is, the mobile terminal 11 includes two sets (two pairs) of camera and microphone. Only one of the two pairs of camera and microphone can receive signals, or both can receive signals simultaneously.
The display section 25 is disposed on one surface of an enclosure of the mobile terminal 11. In the following description, the surface on which the display section 25 is disposed is called a front surface, and the surface that faces away from (is opposite to) the surface on which the display section 25 is disposed is called a rear surface. The display section 25 is formed, for example, of an LCD (liquid crystal display), and a touch panel is layered on the LCD.
The pair of operator camera 22 and operator microphone 24 are so disposed on the front surface of the enclosure of the mobile terminal 11 that the operator himself/herself can capture an image of himself/herself and input his/her audio while looking at the display section 25.
The operator camera 22, which is disposed above the display section 25, captures an image of the operator and inputs a signal carrying an operator image 32. The operator microphone 24, which is disposed below the display section 25, inputs an audio signal. That is, when the operator speaks, an audio inputted through the operator microphone 24, which faces the operator when an image thereof is captured, contains a large amount of operator audio.
The subject camera 21 and the subject microphone 23, which form the other one of the pairs, are so disposed on the rear surface of the enclosure of the mobile terminal 11 that the operator can capture an image of a subject, such as what is going on in an exhibition hall, a lecturer, and a train, and input an audio from the subject while looking at the display section 25.
The subject camera 21, which is disposed in an upper portion of the rear surface, captures an image of a subject and inputs a signal carrying a subject image 31. The subject microphone 23, which is disposed in a lower portion of the rear surface, inputs an audio signal. That is, an audio inputted through the subject microphone 23, which faces the subject when an image thereof is captured, contains a large amount of subject audio.
Since the example in Fig. 1 shows the front side of the enclosure of the mobile terminal 11, the subject camera 21 and the subject microphone 23, which are disposed on the rear surface, are drawn with dotted lines.
The mobile terminal 11 separates a subject audio and an operator audio from the audio signals inputted from the subject microphone 23 and the operator microphone 24 and calculates mix balances (combination proportions) in accordance with the separated audios. The mobile terminal 11 produces an output audio that is a combination of the subject audio and the operator audio combined based on the calculated mix balances. The mobile terminal 11 further produces an output image that is a combination (superimposition) of the subject image and the operator image combined based on the calculated mix balances.
For example, when the mix balances show that the subject audio is louder than the operator audio, an output audio is so produced that the subject audio is louder than the operator audio in the combined audio, and an output image is so produced that the subject image is larger than the operator image in the combined image.
The mobile terminal 11 transmits a signal carrying the produced output audio and a signal carrying the produced output image to a server (not shown) over a network, stores the signals, and otherwise processes the signals.
As described above, the mobile terminal 11 functions as follows: the two pairs of camera and microphone input audios and images; a subject audio and an operator audio are separated from the inputted audios; mix balances are calculated by comparing the subject audio with the operator audio; and a content formed of an output audio and an output image combined in accordance with the mix balances. That is, a content formed of audios and images combined at coordinated proportions is created.
The operator can therefore readily create a content formed of audios and images combined at coordinated proportions only by capturing images and audios with the two pairs of camera and microphone provided in the mobile terminal 11, which excels in portability when carried by the operator, and the operator can transmit the content to a server.

[Example of internal configuration of mobile terminal]

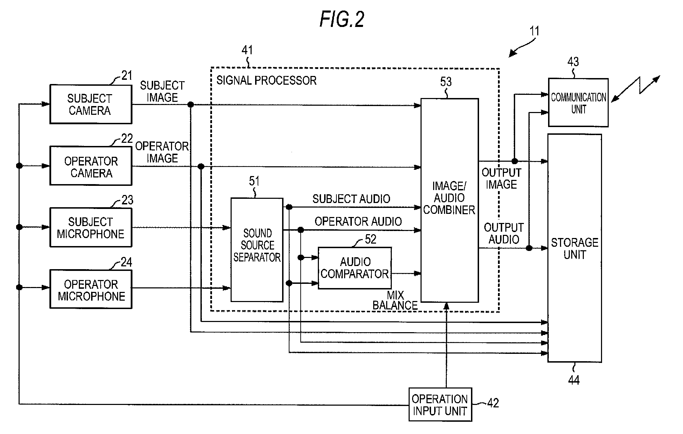

Fig. 2 shows an example of the internal configuration of the mobile terminal.

In the example shown in Fig. 2, the mobile terminal 11 includes the subject camera 21, the operator camera 22, the subject microphone 23, and the operator microphone 24 shown in Fig. 1. The mobile terminal 11 further includes a signal processor 41, an operation input unit 42, a communication unit 43, and a storage unit 44. In the example shown in Fig. 2, the display section 25 shown in Fig. 1 is omitted.

The signal processor 41 is formed, for example, of a digital signal processor (DSP). The signal processor 41 includes a sound source separator 51, an audio comparator 52, and an image/audio combiner 53.

The image/audio combiner 53 and the storage unit 44 are supplied with the signal carrying the subject image 31 inputted from the subject camera 21 and the signal carrying the operator image 32 inputted from the operator camera 22. The sound source separator 51 receives the signal carrying the audio from the subject microphone 23 and the signal carrying the audio from the operator microphone 24.

The audio from the subject microphone 23 contains a larger amount of subject audio than the audio from the operator microphone 24 but also contains the operator audio, background noise, and other sounds as well as the subject audio. Similarly, the audio from the operator microphone 24 contains a larger amount of operator audio than the audio from the subject microphone 23 but also contains the subject audio, background noise, and other sounds as well as the operator audio.

The sound source separator 51 uses the signal carrying the audio from the subject microphone 23 and the signal carrying the audio from the operator microphone 24 to separate the sound sources into a subject audio and an operator audio. The sound source separator 51, for example, uses an unsteady sound source separation method, such as those described in JP-A-2009-147654 and JP-A-2003-271167, to separate sound sources into a subject audio and an operator audio.

The sound source separation method used in the sound source separator 51 is not limited to any of the unsteady sound source separation methods described above and may, for example, be any suitable sound separation method, such as an adaptive beamformer and ICA.

The sound source separator 51 supplies the audio comparator 52, the image/audio combiner 53, and the storage unit 44 with signals carrying the separated subject audio and operator audio.

The audio comparator 52 uses the subject audio and the operator audio, which have been separated from the sound sources by the sound source separator 51, to calculate image/audio mix balances (combination proportions) to be used in a later stage. Specifically, the audio comparator 52 uses an amplitude width $x1(t)$ of the subject audio and an amplitude width $x2(t)$ of the operator audio, which are functions of time $t$, to determine a mix balance $m1(t)$ of the subject audio and a mix balance $m2(t)$ of the operator audio in the form of power ratio between the signals. The mix balances $m1(t)$ and $m2(t)$ are calculated by the following Expression (1).

$$m_1(t) = \frac{E\left[x_1(t)^2\right]}{E\left[x_1(t)^2\right] + E\left[x_2(t)^2\right]}$$

$$m_2(t) = \frac{E\left[x_2(t)^2\right]}{E\left[x_1(t)^2\right] + E\left[x_2(t)^2\right]} \qquad \cdots (1)$$

In Expression (1), E represents expectation operation.

Mix balances determined by the audio comparator 52 are not necessarily determined by using Expression (1) described above and can alternatively be determined by using a variety of other conceivable methods, such as simply replacing the mix balance having smaller power with zero and calculating mix balances based on the square of the power ratio.

Further, each mix balance may alternatively be an audio likeness indicator indicating how close each audio is to a natural sound and determined, for example, by using an audio sensing method (Gaussian mixture model for learning audio based on statistical model) or a sub-harmonic summation method for determining the proportions of harmonic components of an inputted audio.

The image/audio combiner 53 is supplied with the signal carrying the subject image 31 inputted from the subject camera 21 and the signal carrying the operator image 32 inputted from the operator camera 22. The image/audio combiner 53 is further supplied with the signals carrying the subject audio and the operator audio having been separated by the sound source separator 51 and the mix balances determined by the audio comparator 52.

The image/audio combiner 53 edits the subject image 31 and the operator image 32 in accordance with the mix balances from the sound source separator 51 to produce an output image. The image/audio combiner 53 further edits the subject audio and the operator audio in accordance with the mix balances from the sound source separator 51 to produce an output audio.

That is, the image/audio combiner 53 changes the sizes of the subject image 31 and the operator image 32 in accordance with the mix balances from the sound source separator 51 and combines the images with each other (superimposes the images on each other) to produce the output image. The image/audio combiner 53 further changes the loudness of the subject audio and the operator audio in accordance with the mix balances from the sound source separator 51 and combines the audios with each other to produce the output audio.

The image/audio combiner 53 supplies the communication unit 43 and the storage unit 44 with a content formed of the thus produced output image and output audio.

The operation input unit 42 is formed, for example, of press buttons provided on the enclosure and the touch panel layered on the display section 25 shown in Fig. 1. The operation input unit 42 supplies user operation to the corresponding one of the subject camera 21, the operator camera 22, the subject microphone 23, the operator microphone 24, and the image/audio combiner 53 in accordance with the user operation.

The communication unit 43 transmits the content formed of the output image and the output audio supplied from the image/audio combiner 53 to a server over the Internet or any other network.

The storage unit 44 stores the content formed of the output image and the output audio having been edited by the image/audio combiner 53. The storage unit 44 further stores the signal carrying the subject image 31 inputted from the subject camera 21 and the signal carrying the operator image 32 inputted from the operator camera 22 as pre-combined images. The storage unit 44 further stores the subject audio and the operator audio having been separated by the sound source separator 51 as pre-combined audios.

The storage unit 44, which stores signals carrying separated subject audio and user audio as pre-combined audios, may alternatively store an audio inputted from the subject microphone 23 and an audio inputted from the operator microphone 24.

[Example of configuration of image/audio combiner]

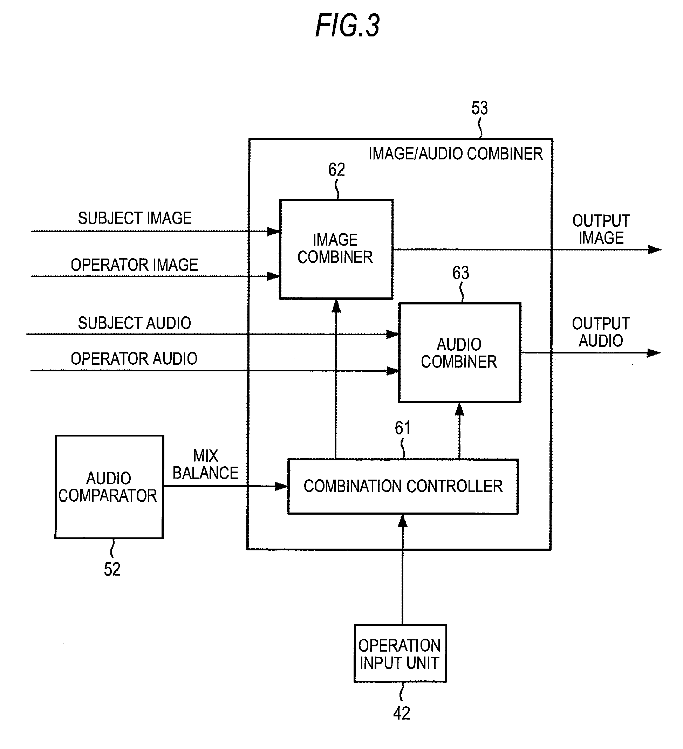

Fig. 3 shows an example of the configuration of the image/audio combiner 53 shown in Fig. 2.

In the example shown in Fig. 3, the image/audio combiner 53 includes a combination controller 61, an image combiner 62, and an audio combiner 63.

The combination controller 61 is supplied with an instruction from the user via the operation input unit 42 and the mix balances determined by the audio comparator 52. The combination controller 61 controls image combination performed in the image combiner 62 and audio combination performed in the audio combiner 63 in accordance with the supplied mix balances based on the instruction from the user via the operation input unit 42.

The image combiner 62 is supplied with the signal carrying the subject image 31 inputted from the subject camera 21 and the signal carrying the operator image 32 inputted from the operator camera 22. The image combiner 62 changes the sizes of the subject image 31 and the operator image 32 and combines the images with each other (superimposes the images on each other) to produce an output image under the control of the combination controller 61.

The audio combiner 63 is supplied with the subject audio and the operator audio having been separated by the sound source separator 51. The audio combiner 63 changes the loudness of the subject audio and the operator audio and combines (sums) the audios with each other to produce an output audio under the control of the combination controller 61.

The audio combiner 63 does not necessarily use the method described above but may assign the subject audio to a stereo left channel and the operator audio to a stereo right channel and multiply the subj ect and operator audios by the mix balances m1(t) and m2 (t) respectively before the audios are outputted.

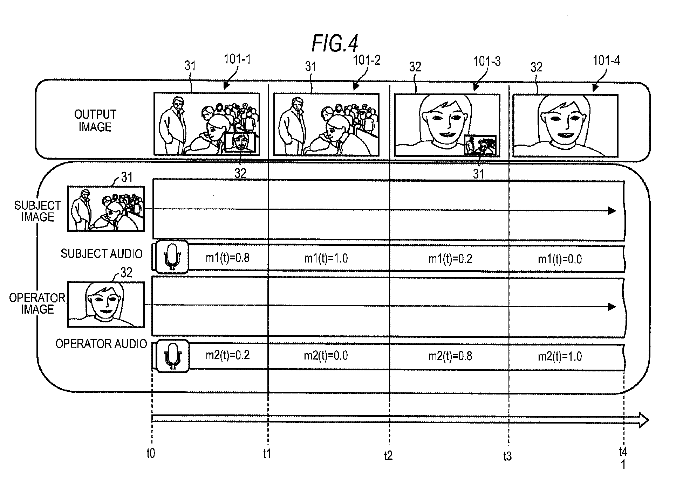

A description will next be made of processes carried out by the combination controller 61, the image combiner 62, and the audio combiner 63 with reference to Fig. 4.

The example in Fig. 4 shows an output image 101-1 produced at time t0 to an output image 101-4 produced at time t4, the subject image 31 inputted from the subject camera 21, and the mix balance of the subject audio determined by the audio comparator 52 in this order from above. Further, below those described above are shown the operator image 32 inputted from the operator camera 22 and the mix balance of the operator audio determined by the audio comparator 52. The arrows extending from the time t0 to t4 in the fields for the subject image 31 and the operator image 32 represent that the subject image 31 and the operator image 32 on the left keep being inputted.

From time t0 to t1, the mix balance m1(t) of the subject audio is 0.8, and the mix balance m2 (t) of the operator audio is 0.2. When m1(t)=0.8 and m2(t)=0.2, the combination controller 61 controls the image combiner 62 to multiply the subject image 31 by 1, multiply the operator image 32 by m2(t)/m1(t)=0.25, and superimpose and display the operator image 32 on the subject image 31.

As a result, the image combiner 62 produces an output image 101-1 in which the operator image 32 multiplied by 0.25 is superimposed on a lower right portion of the subject image 31 having the same size as the entire screen (picture in picture: PinP). The audio combiner 63, which is similarly controlled, multiplies the subject audio by 1, multiplies the operator audio by 0.25, and combines the operator audio with the subject audio to produce a combined output audio.

From time t1 to t2 in the following range, the mix balance m1(t) of the subject audio is 1.0, and the mix balance m2(t) of the operator audio is 0.0. When m1(t)=1.0 and m2(t)=0.0, the combination controller 61 controls the image combiner 62 to display only the subject image 31.

As a result, the image combiner 62 produces an output image 101-2 formed only of the subject image 31 having the same size as the entire screen. The audio combiner 63, which is similarly controlled, produces an output audio formed only of the subject audio.

From time t2 to t3, the mix balance m1(t) of the subject audio is 0.2, and the mix balance m2 (t) of the operator audio is 0.8. When m1(t)=0.2 and m2(t)=0.8, the combination controller 61 controls the image combiner 62 to multiply the operator image 32 by 1, multiply the subject image 31 by m1(t)/m2(t)=0.25, and superimpose and display the subject image 31 is on the operator image 32.

As a result, the image combiner 62 produces an output image 101-3 in which the subject image 31 multiplied by 0.25 is superimposed on a lower right portion of the operator image 32 having the same size as the entire screen. The audio combiner 63, which is similarly controlled, multiplies the operator audio by 1, multiplies the subject audio by 0.25, and combines the subject audio with the operator audio to produce a combined output audio.

From time t3 to t4 in the following range, the mix balance m1(t) of the subject audio is 0.0, and the mix balance m2(t) of the operator audio is 1.0. When m1(t)=0.0 and m2(t)=1.0, the combination controller 61 controls the image combiner 62 to display only the operator image 32.

As a result, the image combiner 62 produces an output image 101-4 formed only of the operator image 32 having the same size as the entire screen. The audio combiner 63, which is similarly controlled, produces an output audio formed only of the operator audio.

As described above, images and audios are combined in accordance with the mix balances of a subject audio and an operator audio. That is, a content is created by combining images and audios in a coordinated manner.

The user can therefore quickly and readily create a content formed by combining images and audios in a coordinated manner. Further, since the user can immediately transmit the resultant content to a server via the communication unit 43, other users can instantly enjoy the content created by combining two images and two audios of an operator and a subject.

In the example shown in Fig. 4, in which the time course ends at the time t4, images and audios keep being inputted after the time t4, and the audios are separated into a subject audio and an operator audio and the mix balances are determined. The combination controller 61 controls the image and audio combination in accordance with the mix balances of the subject audio and the operator audio.

In the above description, the method for combining images has been described with reference to PinP. Alternatively, a side-by-side method in which a plurality of images are arranged side by side may be used. In this case, the sizes of the images are changed in accordance with the mix balances.

[Example of processes carried out by mobile terminal]

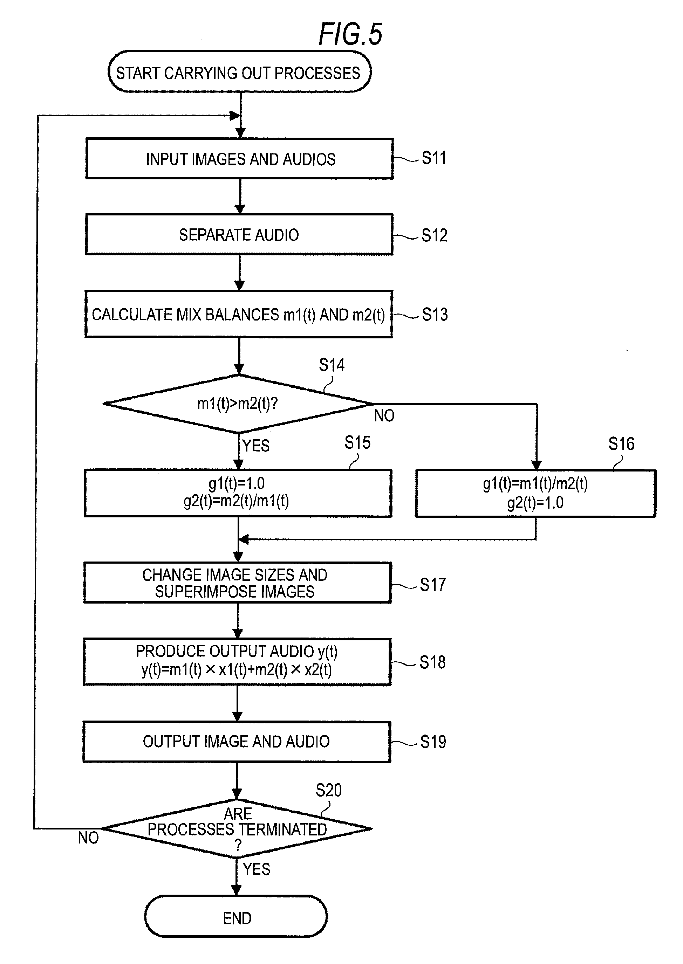

A description will next be made of processes carried out by the mobile terminal 11, which captures images and audios by using two pairs of camera and microphone, edits the images and audios in real time, and transmits the edited images and audios to a server, with reference to the flowchart shown in Fig. 5.

When the user issues an instruction via the operation input unit 42, the subject camera 21, the operator camera 22, the subject microphone 23, and the operator microphone 24 start operating. In step S11, the subject camera 21 and the operator camera 22 input images, and the subject microphone 23 and the operator microphone 24 input audios.

A signal carrying a subject image 31 inputted from the subject camera 21 and a signal carrying an operator image 32 inputted from the operator camera 22 are supplied to the image/audio combiner 53 and the storage unit 44. A signal carrying an audio inputted from the subject microphone 23 and a signal carrying an audio inputted from the operator microphone 24 are supplied to the sound source separator 51.

In step S12, the sound source separator 51 uses the signal carrying the audio from the subject microphone 23 and the signal carrying the audio from the operator microphone 24 to separate the sound sources into a subject audio and an operator audio. Signals carrying the separated subject audio and operator audio are supplied to the audio comparator 52, the image/audio combiner 53, and the storage unit 44.

In step S13, the audio comparator 52 uses the separated subject audio and operator audio to calculate the mix balance $m1(t)$ of the subject audio and the mix balance $m2(t)$ of the operator audio based on Expression (1) described above. The determined mix balances $m1(t)$ and $m2(t)$ are supplied to the combination controller 61.

In step S14, the combination controller 61 determines whether or not the mix balance $m1(t)$ of the subject audio is greater than the mix balance $m2(t)$ of the operator audio. When it is determined in step S14 that the mix balance $m1(t)$ of the subject audio is greater than the mix balance $m2(t)$ of the operator audio, the process in step S15 is carried out.

In step S15, the combination controller 61 sets a compression factor $g1(t)$ of the subject image 31 and a compression factor $g2(t)$ of the operator image 32 at values expressed by the following Expression (2), and the thus set compression factors $g1(t)$ and $g2(t)$ are supplied to the image combiner 62.

$$g1(t)=1.0$$

$$g2(t)=m2(t)/m1(t) \qquad (2)$$

When it is determined in step S14 that the mix balance $m1(t)$ of the subject audio is smaller than or equal to the mix balance $m2(t)$ of the operator audio, the process in step S16 is carried out.

In step S16, the combination controller 61 sets the compression factor $g1(t)$ of the subject image 31 and the compression factor $g2(t)$ of the operator image 32 at values expressed by the following Expression (3), and the thus set compression factors $g1(t)$ and $g2(t)$ are supplied to the image combiner 62.

$$g1(t)=m1(t)/m2(t)$$

$$g2(t)=1.0 \qquad (3)$$

In step S17, the image combiner 62 uses the compression factors $g1(t)$ and $g2(t)$ supplied from the combination controller 61 to change the image sizes of the subject image 31 and the operator image 32 and superimposes one of the subject image 31 and the operator image 32 on the other, whereby an output image in which one of the subject image 31 and the operator image 32 is superimposed on the other (output image 101-1 in Fig. 4, for example) is produced.

In step S18, the combination controller 61 supplies the audio combiner 63 with the mix balance $m1(t)$ of the subject audio and the mix balance $m2(t)$ of the operator audio and instructs the audio combiner 63 to produce an output audio $y(t)$.

That is, the audio combiner 63 uses the amplitude width $x1(t)$ of the subject audio, the amplitude width $x2(t)$ of the operator audio, the mix balance $m1(t)$ of the subject audio, and the mix balance $m2(t)$ of the operator audio to produce the output audio $y(t)$ as expressed by the following Expression (4) .

$$y(t)=m1(t)\times x1(t)+m2(t)\times x2(t) \qquad (4)$$

In step S19, the image combiner 62 and the audio combiner 63 synchronously outputs the produced output image and output audio as a content to the communication unit 43 and the storage unit 44 under the control of the combination controller 61.

In response to this, the communication unit 43 transmits the content via a network to a desired site in a server (not shown), and the storage unit 44 stores the content. The storage unit 44 specifically stores the signal carrying the subject image 31 inputted from the subject camera 21, the signal carrying the operator image 32 inputted from the operator camera 22, the signals carrying the separated subject audio and operator audio, and the content created therefrom related to each other.

The combination controller 61 determines in step S20 whether or not to terminate the processes. When the user instructs to terminate the processes via the operation input unit 42, the combination controller 61 determines in step S20 to terminate the processes, and the processes shown in Fig. 5 are terminated.

On the other hand, when the combination controller 61 determines in step S20 not to terminate the processes, the control returns to step S11 and the processes in step S11 and the following steps are repeated.

As described above, images and audios inputted by using the two pairs of camera and microphone are edited in real time, and the edited content (that is, images and audios combined in a coordinated manner) is transmitted to a server.

That is, the user can readily perform real-time editing, which is highly convenient for the user. Further, since a content is immediately uploaded to a server, other users can look at the content, which is interesting because images of the operator and comments from the operator are contained, in nearly real time.

A description will next be made of a case where a fine adjustment is made on a content having been edited in real time as described above.

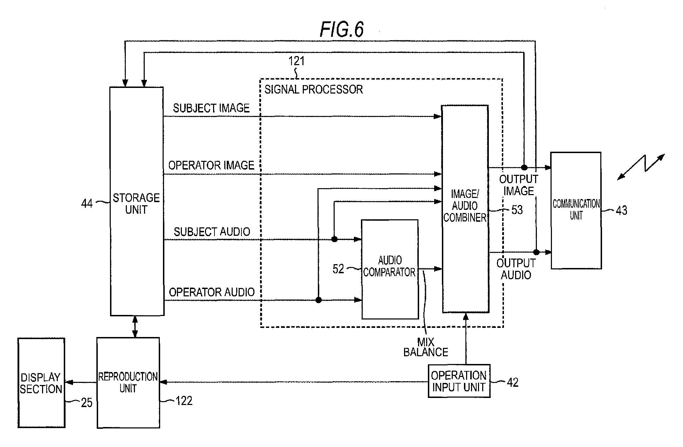

Fig. 6 shows an example of the internal configuration of a mobile terminal capable of making a fine adjustment on a content. In the example shown in Fig. 6, portions corresponding to those in the example shown in Fig. 2 have corresponding reference characters, and no duplicated description will be made as appropriate.

A mobile terminal 11 shown in Fig. 6 is similar to the mobile terminal 11 shown in Fig. 2 in that the operation input unit 42, the communication unit 43, and the storage unit 44 are provided. On the other hand, the mobile terminal 11 shown in Fig. 6 differs from the mobile terminal 11 shown in Fig. 2 in that the subject camera 21, the operator camera 22, the subject microphone 23, and the operator microphone 24 shown in Fig. 1 are omitted. Further, the mobile terminal 11 shown in Fig. 6 differs from the mobile terminal 11 shown in Fig. 2 in that the signal processor 41 is replaced with a signal processor 121 and the display section 25 shown in Fig. 1 and a reproduction unit 122 are added.

The operation input unit 42 supplies user operation to the corresponding one of the image/audio combiner 53 and the reproduction unit 122 in accordance with the user operation. In particular, the operation input unit 42 supplies the image/audio combiner 53 with a user instruction to edit an image reproduced by the reproduction unit 122 and displayed on the display section 25.

The storage unit 44 supplies the reproduction unit 122 with an output image and an output audio that form an edited, stored content in response to an instruction from the reproduction unit 122. In this process, the storage unit 44 supplies the signal processor 121 with a subject image 31, an operator image 32, a subject audio, and an operator audio stored in relation to the content.

The signal processor 121 differs from the signal processor 41 in that the sound source separator 51 shown in Fig. 2 is omitted. That is, the signal processor 121 includes the audio comparator 52 and the image/audio combiner 53.

The audio comparator 52 receives a subject audio and an operator audio from the storage unit 44. The audio comparator 52 uses the subject audio and the operator audio from the storage unit 44 to calculate the image/audio mix balances (combination proportions) used in a later stage and supplies the calculated mix balances to the image/audio combiner 53.

The image/audio combiner 53 includes the combination controller 61, the image combiner 62, and the audio combiner 63, as in the image/audio combiner 53 shown in Fig. 3. The mix balances from the audio comparator 52 and user operation via the operation input unit 42 are supplied to the combination controller 61.

The combination controller 61 changes the mix balances determined by the audio comparator 52 in accordance with a user's editing instruction via the operation input unit 42 and controls the image combination performed by the image combiner 62 and the audio combination performed by the audio combiner 63 in accordance with the changed mix balances. The combination controller 61 synchronously outputs the produced output image and output audio to the communication unit 43 and the storage unit 44.

The image combiner 62 is supplied with a signal carrying the subject image 31 and a signal carrying the operator image 32 both stored in the storage unit 44. The image combiner 62 changes the sizes of the subject image 31 and the operator image 32 and combines the images with each other (superimposes the images on each other) to produce an output image under the control of the combination controller 61.

The audio combiner 63 is supplied with a signal carrying the subject audio and a signal carrying the operator audio both stored in the storage unit 44. The audio combiner 63 changes the loudness of the subject audio and the operator audio and combines (sums) the audios with each other to produce an output audio under the control of the combination controller 61.

The reproduction unit 122 reproduces the content edited by the image/audio combiner 53, displays the image of the content on the display section 25, and outputs the audio of the content to a loudspeaker (not shown), for example, in response to user operation inputted via the operation input unit 42 or any other component.

The example shown in Fig. 6 has been described with reference to the case where the mix balances of the stored subject audio and subject image are calculated again. Alternatively, mix balances of the subject audio and the subject image may be stored in the storage unit 44 or any other component and the stored mix balances may be used.

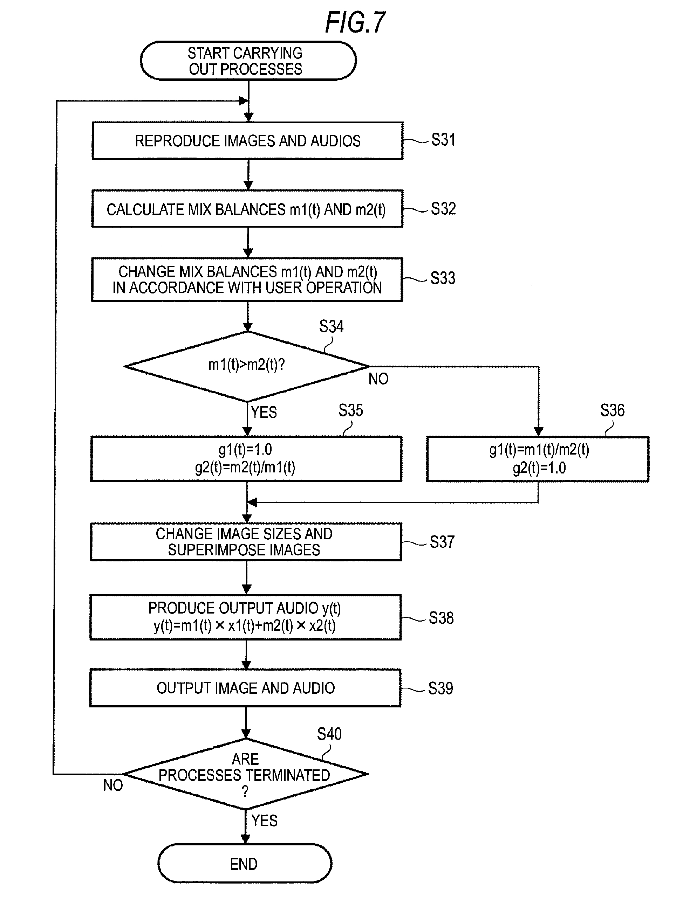

Exemplary processes of making a fine adjustment on a content edited in real time as described above with reference to Fig. 5 will next be described with reference to the flowchart shown in Fig. 7. When the user instructs to perform reediting via the operation input unit 42, the processes shown in Fig. 7 start. The operator or a user other than the operator may be the user who performs reediting. Processes in steps S34 to S40 in Fig. 7 are basically the same as those in steps S14 to S20 in Fig. 5, and no detailed description thereof will therefore be made to avoid redundancy.

In step S31, the reproduction unit 122 reproduces the images and audios that form the content outputted and stored in the storage unit 44 in step S19 in Fig. 5. The reproduced images are displayed on the display section 25, and the reproduced audios are outputted to a loudspeaker (not shown) .

In step S32, the audio comparator 52 uses the subject audio and the operator audio from the storage unit 44 to calculate the mix balance m1(t) of the subject audio and the mix balance m2 (t) of the operator audio. The thus determined mix balances m1(t) and m2(t) are supplied to the combination controller 61.

For example, when the user desires to lower the loudness of audios of the operator (himself/herself) because they are loud, the user instructs via the operation input unit 42 to scale down the operator image 32 displayed on the display section 25. A method for scaling the image up or down may, for example, include displaying a scale-down button on the display section 25 and allowing the user to press the button or allowing the user to directly scale down the operator image 32 on the display section 25. The operation input unit 42 detects the user operation of scaling the image down and supplies the detected result to the combination controller 61.

In step S33, the combination controller 61 changes the mix balances in accordance with the user operation described above.

The combination controller 61 changes the mix balance m1(t) of the subject audio and the mix balance m2(t) of the operator audio based, for example, on the following Expression (5).

$$m_1(t) = \frac{E\left[x_1(t)^2\right]}{E\left[x_1(t)^2\right] + \alpha \cdot E\left[x_2(t)^2\right]}$$

$$m_2(t) = \frac{\alpha \cdot E\left[x_2(t)^2\right]}{E\left[x_1(t)^2\right] + \alpha \cdot E\left[x_2(t)^2\right]} \quad \cdots (5)$$

In Expression (5), x1(t) represents the amplitude width of a subject audio, x2(t) represents the amplitude width of an operator audio, and E represents expectation operation, as in Expression (1). Further, $\alpha$ represents a parameter for changing the loudness balance between the subject audio and the operator audio, and $\alpha$ is inputted through the operation input unit 42. Inputting a value $\alpha$ smaller than corresponds to lowering the loudness of the operator audio and raising that of the subject audio. Conversely, inputting a value $\alpha$ greater than corresponds to lowering the loudness of the subject audio and raising that of the operator audio.

In step S34, the combination controller 61 determines whether or not the mix balance m1(t) of the subject audio is greater than the mix balance m2 (t) of the operator audio. When it is determined in step S34 that the mix balance m1 (t) of the subject audio is greater than the mix balance m2(t) of the operator audio, the process in step S35 is carried out.

In step S35, the combination controller 61 sets the compression factor g1(t) of the subject image 31 and the compression factor g2(t) of the operator image 32 at values expressed by Expression (2) described above, and the thus set compression factors g1(t) and g2 (t) are supplied to the image combiner 62.

When it is determined in step S34 that the mix balance m1(t) of the subject audio is smaller than or equal to the mix balance m2 (t) of the operator audio, the process in step S36 is carried out.

In step S36, the combination controller 61 sets the compression factor g1(t) of the subject image 31 and the compression factor g2(t) of the operator image 32 at values expressed by Expression (3) described above, and the thus set compression factors g1(t) and g2 (t) are supplied to the image combiner 62.

In step S37, the image combiner 62 uses the compression factors g1(t) and g2(t) supplied from the combination controller 61 to change the image sizes of the subject image 31 and the operator image 32 and superimposes one of the subject image 31 and the operator image 32 on the other, whereby an output image in which one of the subject image 31 and the operator image 32 is superimposed on the other is produced.

In step S38, the combination controller 61 supplies the audio combiner 63 with the mix balance m1(t) of the subject audio and the mix balance m2(t) of the operator audio and instructs the audio combiner 63 to produce an output audio y(t), as expressed by Expression (4) described above.

In step S39, the image combiner 62 and the audio combiner 63 synchronously outputs the produced output image and output audio as a content to the communication unit 43 and the storage unit 44 under the control of the combination controller 61.

In response to this, the communication unit 43 transmits the content via a network to a desired site in a server (not shown), and the storage unit 44 stores the content.

The reproduction unit 122 and the combination controller 61 determine in step S40 whether or not to terminate the processes. When the user instructs to terminate the processes via the operation input unit 42, the reproduction unit 122 and the combination controller 61 determine in step S40 to terminate the processes, and the processes shown in Fig. 7 are terminated.

On the other hand, when the reproduction unit 122 and the combination controller 61 determine in step S40 not to terminate the processes, the control returns to step S31 and the processes in step S31 and the following steps are repeated.

The above description has been made with reference to the case where the mix balances are changed in accordance with user operation representing the proportions of two images. Alternatively, images and audios may be combined in accordance with user operation representing the proportions of a plurality of images.

As described above, images and audios inputted by using the two pairs of camera and microphone are edited in real time to form a content, and a fine adjustment (reediting) is made on the images or the audios that form the content. In the fine adjustment, the images are scaled up or down, and the audios are made louder or lower in coordination with the scaled-up or scaled-down images.

That is, a fine adjustment of a content edited in real time can be made by specifying an image that allows the user to visually check the proportion of the size of the image and making the fine adjustment in an image/audio coordinated manner. The user can therefore readily make the fine adjustment.

As described above, according to the mobile terminal including the two pairs of camera and microphone, the sizes of images can be changed based on audios separated from sound sources from the plurality of microphones in coordination with the loudness of the separated audios. Further, the loudness balance between an operator audio and a subject audio can be changed in coordination with image sizes changed by the user.

A content formed of the thus changed images and audios is then produced and immediately transmitted to a server, whereby not only the user himself/herself but also other users can instantly enjoy the content.

The series of processes described above can be carried out by either hardware or software. To carry out the series of processes by software, a program that forms the software is installed in a computer. The computer may be a computer incorporated in dedicated hardware, a general-purpose personal computer capable of performing a variety of functions by installing a variety of programs, or any other suitable computer.

[Example of configuration of computer]

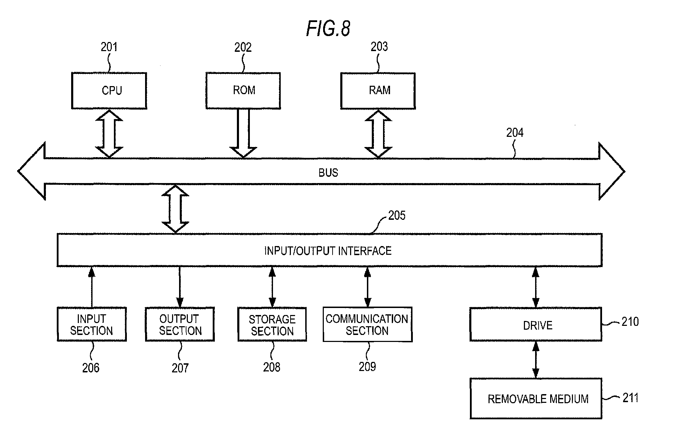

Fig. 8 shows an example of the configuration of the hardware of a computer on which a program that carries out the series of processes described above runs.

In the computer, a CPU (central processing unit) 201, a ROM (read only memory) 202, and a RAM (random access memory) 203 are interconnected to each other via a bus 204.

An input/output interface 205 is also connected to the bus 204. An input section 206, an output section 207, a storage section 208, a communication section 209, and a drive 210 are connected to the input/output interface 205.

The input section 206 is formed, for example, of a keyboard, a mouse, and a microphone. The output section 207 is formed, for example, of a display and a loudspeaker. The storage section 208 is formed, for example, of a hard disk drive and a nonvolatile memory. The communication section 209 is formed, for example, of a network interface. The drive 210 drives a removable medium 211, such as a magnetic disk, an optical disk, a magneto-optical disk, and a semiconductor memory.

In the thus configured computer, the CPU 201, for example, loads a program stored in the storage section 208 into the RAM 203 via the input/output interface 205 and the bus 204 and executes the program to carry out the series of processes described above.

The program to be executed by the computer (CPU 201) can, for example, be recorded on the removable medium 211 and provided as a package medium. The program can alternatively be provided via a wired or wireless transmission medium, such as a local area network, the Internet, and digital satellite broadcasting.

In the computer, the program can be installed in the storage section 208 via the input/output interface 205 by loading the removable medium 211 into the drive 210. The program can alternatively be received through the communication section 209 via the wired or wireless transmission medium and installed in the storage section 208. Still alternatively, the program can be installed in advance in the ROM 202 or the storage section 208.

The program to be executed by the computer may be a program according to which the processes are carried out successively in the time sequence described herein or a program according to which the processes are carried out concurrently or each of the processes is carried out at a necessary timing, for example, when the process is called.

The steps that describe the series of processes described above in the present specification include not only processes carried out in time series in the described order but also processes carried out not necessarily in time series but concurrently or individually.

Embodiments according to the present disclosure are not limited to the embodiment described above, but a variety of changes can be made thereto to the extent that they do not depart from the substance of the present disclosure.

For example, the present disclosure can have a cloud computing configuration in which a single function is achieved by a plurality of apparatus over a network in a shared, cooperative manner.

Each of the steps described with reference to the flowcharts described above can be executed by a single apparatus or a plurality of apparatus in a shared manner.

Further, when a single step has a plurality of processes, the plurality of processes that form the single step can be executed by a single apparatus or a plurality of apparatus in a shared manner.

Preferred embodiments of the present disclosure have been described in detail with reference to the accompanying drawings, but the present disclosure is not limited to the embodiments. Those who are adequately skilled in the technical field of the present disclosure can obviously come up with a variety of changes and modifications within the range of technical spirit set forth in the appended claims, and these changes and modifications, of course, fall within the technical scope of the present disclosure.

The present disclosure may be implemented as the following configurations.

(1) A signal processing apparatus including

an audio separator that separates audios into a first audio and a second audio using two inputted audio signals,

an audio combiner that combines the first audio with the second audio based on proportions of the audios separated by the audio separator, and

an image combiner that combines a first image corresponding to the first audio with a second image corresponding to the second audio based on the proportions of the audios separated by the audio separator.

(2) The signal processing apparatus described in (1), further including

a first microphone that inputs one of the two audio signals that contains a greater amount of the first audio,

a second microphone that inputs the other one of the two audio signals that contains a greater amount of the second audio,

a first camera that inputs a signal carrying the first image, and

a second camera that inputs a signal carrying the second image.

(3) The signal processing apparatus described in (2),

wherein the first microphone and the first camera are disposed on one surface of an enclosure, and

the second microphone and the second camera are disposed on a surface different from the one surface of the enclosure.

(4) The signal processing apparatus described in any of (1) to (3), further including

an operation input unit that inputs proportions of the first image and the second image in accordance with user operation, and

a proportion changer that changes the proportions of the separated audios in accordance with the proportions inputted by the operation input unit,

wherein the image combiner combines the first image with the second image based on the proportions changed by the proportion changer, and

the audio combiner combines the first audio with the second audio based on the proportions changed by the proportion changer.

(5) The signal processing apparatus described in any of (1) to (4), further including

a proportion calculator that calculates the proportions of the audios separated by the audio separator.

(6) The signal processing apparatus described in (3),

wherein the enclosure is so shaped that the signal processing apparatus is portable by a user.

(7) The signal processing apparatus described in (3), further including

a display section provided on the one surface.

(8) The signal processing apparatus described in any of (1) to (7), further including

a transmitter that transmits data on the audio combined by the audio combiner and data on the image combined by the image combiner to a server.

(9) A signal processing method, the method including

a signal processing apparatus using two inputted audio signals to separate the audios into a first audio and a second audio,

the signal processing apparatus combining the first audio with the second audio based on proportions of the separated audios, and

the signal processing apparatus combining a first image corresponding to the first audio with a second image corresponding to the second audio based on the proportions of the separated audios.

(10) A program that instructs a computer to function as

an audio separator that separates audios into a first audio and a second audio using two inputted audio signals,

an audio combiner that combines the first audio with the second audio based on proportions of the audios separated by the audio separator, and

an image combiner that combines a first image corresponding to the first audio with a second image corresponding to the second audio based on the proportions of the audios separated by the audio separator.

(11) A signal processing apparatus including

an audio separator that separates audios into a first audio and a second audio using two inputted audio signals,

an operation input unit that inputs proportions of a first image corresponding to the first audio and a second image corresponding to the second audio in accordance with user operation,

an image combiner that combines the first image with the second image based on the proportions inputted by the operation input unit, and

an audio combiner that combines the first audio with the second audio based on the proportions inputted by the operation input unit.

(12) The signal processing apparatus described in (11), further including

a first microphone that inputs one of the two audio signals that contains a greater amount of the first audio,

a second microphone that inputs the other one of the two audio signals that contains a greater amount of the second audio,

a first camera that inputs a signal carrying the first image, and

a second camera that inputs a signal carrying the second image.

(13) The signal processing apparatus described in (12),

wherein the first microphone and the first camera are disposed on one surface of an enclosure, and

the second microphone and the second camera are disposed on a surface different from the one surface of the enclosure.

(14) The signal processing apparatus described in any of (11) to (13), further including

a proportion changer that changes the proportions of the separated audios in accordance with the proportions inputted by the operation input unit,

wherein the image combiner combines the first image with the second image based on the proportions changed by the proportion changer, and

the audio combiner combines the first audio with the second audio based on the proportions changed by the proportion changer.

(15) The signal processing apparatus described in any of (11) to (14), further including

a proportion calculator that calculates the proportions of the audios separated by the audio separator.

(16) The signal processing apparatus described in (13),

wherein the enclosure is so shaped that the signal processing apparatus is portable by a user.

(17) The signal processing apparatus described in (13), further including

a display section provided on the one surface.

(18) The signal processing apparatus described in any of (11) to (17), further including

a transmitter that transmits data on the audio combined by the audio combiner and data on the image combined by the image combiner to a server.

(19) A signal processing method including

allowing a signal processing apparatus to

separate audios into a first audio and a second audio using two inputted audio signals,

input proportions of a first image corresponding to the first audio and a second image corresponding to the second audio in accordance with user operation,

combine the first image with the second image based on the inputted proportions, and

combine the first audio with the second audio based on the inputted proportions.

(20) A program that instructs a computer to function as

an audio separator that separates audios into a first audio and a second audio using two inputted audio signals,

an operation input unit that inputs proportions of a first image corresponding to the first audio and a second image corresponding to the second audio in accordance with user operation,

an image combiner that combines the first image with the second image based on the proportions inputted by the operation input unit, and

an audio combiner that combines the first audio with the second audio based on the proportions inputted by the operation input unit.

The present disclosure contains subject matter related to that disclosed in Japanese Priority Patent Application JP 2011-199052 filed in the Japan Patent Office on September 13, 2011, the entire contents of which are hereby incorporated by reference.

It should be understood by those skilled in the art that various modifications, combinations, sub-combinations and alterations may occur depending on design requirements and other factors insofar as they are within the scope of the appended claims or the equivalents thereof.

**Claims**

1. A signal processing apparatus comprising:

   an audio separator that separates audios into a first audio and a second audio using two inputted audio signals;
   an audio combiner that combines the first audio with the second audio based on proportions of the audios separated by the audio separator; and
   an image combiner that combines a first image corresponding to the first audio with a second image corresponding to the second audio based on the proportions of the audios separated by the audio separator.

2. A signal processing apparatus comprising:

   an audio separator that separates audios into a first audio and a second audio using two inputted audio signals;
   an operation input unit that inputs proportions of a first image corresponding to the first audio and a second image corresponding to the second audio in accordance with user operation;
   an image combiner that combines the first image with the second image based on the proportions inputted by the operation input unit; and
   an audio combiner that combines the first audio with the second audio based on the proportions inputted by the operation input unit.

3. The signal processing apparatus according to claim 1 or 2, further comprising:

   a first microphone that inputs one of the two audio signals that contains a greater amount of the first audio;
   a second microphone that inputs the other one of the two audio signals that contains a greater amount of the second audio;
   a first camera that inputs a signal carrying the first image; and
   a second camera that inputs a signal carrying the second image.

4. The signal processing apparatus according to claim 3,
   wherein the first microphone and the first camera are disposed on one surface of an enclosure, and
   the second microphone and the second camera are disposed on a surface different from the one surface of the enclosure.

5. The signal processing apparatus according to claim 3 or 4, further comprising
   a proportion calculator that calculates the proportions of the audios separated by the audio separator.

6. The signal processing apparatus according to claim 4,
   wherein the enclosure is so shaped that the signal processing apparatus is portable by a user.

7. The signal processing apparatus according to claim 4, further comprising
   a display section provided on the one surface.

8. The signal processing apparatus according to claim 1 and including the features of claim 4, further comprising:

   an operation input unit that inputs proportions of the first image and the second image in accordance with user operation; and
   a proportion changer that changes the proportions of the separated audios in accordance with the proportions inputted by the operation input unit,
wherein the image combiner combines the first image with the second image based on the proportions changed by the proportion changer, and
the audio combiner combines the first audio with the second audio based on the proportions changed by the proportion changer.

9. The signal processing apparatus according to claim 2 and including the features of claim 4, further including a proportion changer that changes the proportions of the separated audios in accordance with the proportions inputted by the operation input unit,
wherein the image combiner combines the first image with the second image based on the proportions changed by the proportion changer, and
the audio combiner combines the first audio with the second audio based on the proportions changed by the proportion changer.

10. The signal processing apparatus according to any one of claims 1 to 9, further comprising a transmitter that transmits data on the audio combined by the audio combiner and data on the image combined by the image combiner to a server.

11. A signal processing method, the method comprising:

allowing a signal processing apparatus to separate audios into a first audio and a second audio using two inputted audio signals;
combine the first audio with the second audio based on proportions of the separated audios; and
combine a first image corresponding to the first audio with a second image corresponding to the second audio based on the proportions of the separated audios.

12. A program that instructs a computer to function as
an audio separator that separates audios into a first audio and a second audio using two inputted audio signals,
an audio combiner that combines the first audio with the second audio based on proportions of the audios separated by the audio separator, and
an image combiner that combines a first image corresponding to the first audio with a second image corresponding to the second audio based on the proportions of the audios separated by the audio separator.

13. A signal processing method comprising:

allowing a signal processing apparatus to separate audios into a first audio and a second audio using two inputted audio signals;
input proportions of a first image corresponding to the first audio and a second image corresponding to the second audio in accordance with user operation;
combine the first image with the second image based on the inputted proportions; and
combine the first audio with the second audio based on the inputted proportions.

14. A program that instructs a computer to function as
an audio separator that separates audios into a first audio and a second audio using two inputted audio signals;
an operation input unit that inputs proportions of a first image corresponding to the first audio and a second image corresponding to the second audio in accordance with user operation;
an image combiner that combines the first image with the second image based on the proportions inputted by the operation input unit; and
an audio combiner that combines the first audio with the second audio based on the proportions inputted by the operation input unit.

## FIG.1

FIG.2

# FIG.3

## FIG.4

# FIG.5

```
START CARRYING OUT PROCESSES
```

INPUT IMAGES AND AUDIOS — S11

SEPARATE AUDIO — S12

CALCULATE MIX BALANCES m1(t) AND m2(t) — S13

S14
m1(t)>m2(t)?

NO →

YES ↓

S15
g1(t)=1.0
g2(t)=m2(t)/m1(t)

S16
g1(t)=m1(t)/m2(t)
g2(t)=1.0

CHANGE IMAGE SIZES AND
SUPERIMPOSE IMAGES — S17

PRODUCE OUTPUT AUDIO y(t)
y(t)=m1(t) × x1(t)+m2(t) × x2(t) — S18

OUTPUT IMAGE AND AUDIO — S19

S20
ARE
PROCESSES TERMINATED
?

NO

YES ↓

END

*FIG.6*

## FIG.7

START CARRYING
OUT PROCESSES

REPRODUCE IMAGES AND AUDIOS — S31

CALCULATE MIX BALANCES m1(t) AND m2(t) — S32

CHANGE MIX BALANCES m1(t) AND m2(t)
IN ACCORDANCE WITH USER OPERATION — S33

S34

$m1(t) > m2(t)$?

NO

YES

S35

$g1(t) = 1.0$
$g2(t) = m2(t)/m1(t)$

S36

$g1(t) = m1(t)/m2(t)$
$g2(t) = 1.0$

CHANGE IMAGE SIZES AND
SUPERIMPOSE IMAGES — S37

PRODUCE OUTPUT AUDIO y(t)
$y(t) = m1(t) \times x1(t) + m2(t) \times x2(t)$ — S38

OUTPUT IMAGE AND AUDIO — S39

S40

ARE
PROCESSES TERMINATED
?

NO

YES

END

22

*FIG.8*

Europäisches
Patentamt

European
Patent Office

Office européen
des brevets

# EUROPEAN SEARCH REPORT

Application Number

EP 12 18 0216

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/164105 A1 (LEE JAE HAN [US] ET AL) 7 July 2011 (2011-07-07) * paragraphs [0023], [0034], [0037]; figures 2-3 * | 1-14 | INV. H04N7/14 H04N5/232 H04M1/02 H04R1/00 |
| X | US 2003/117501 A1 (SHIRAKAWA HIROTSUGU [JP]) 26 June 2003 (2003-06-26) * paragraphs [0031] - [0036], [0048] * | 1-14 | |
| X | EP 2 328 018 A1 (CRAMBO S A [ES]; GARCIA MANCHADO NILO [ES]) 1 June 2011 (2011-06-01) * paragraphs [0011], [0014], [0018]; claim 3 * | 1-14 | |
| X | US 2008/239061 A1 (COK RONALD S [US] ET AL) 2 October 2008 (2008-10-02) * paragraph [0036] * | 1-14 | |
| X | EP 1 986 431 A2 (LG ELECTRONICS INC [KR]) 29 October 2008 (2008-10-29) * paragraphs [0044] - [0046]; claim 11 * | 1-14 | TECHNICAL FIELDS SEARCHED (IPC) H04N H04M H04R |
| A | EP 1 246 464 A2 (MITSUBISHI ELECTRIC CORP [JP]) 2 October 2002 (2002-10-02) * paragraphs [0017], [0041] * | 1-14 | |
| A | US 2009/154692 A1 (SAKURABA YOHEI [JP] ET AL) 18 June 2009 (2009-06-18) * the whole document * | 1-14 | |

The present search report has been drawn up for all claims

| Place of search | Date of completion of the search | Examiner |
|---|---|---|
| Berlin | 16 January 2013 | Bertrand, Frédéric |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 12 18 0216

This annex lists the patent family members relating to the patent documents cited in the above-mentioned European search report.
The members are as contained in the European Patent Office EDP file on
The European Patent Office is in no way liable for these particulars which are merely given for the purpose of information.

16-01-2013

| Patent document cited in search report | | Publication date | Patent family member(s) | | Publication date |
|---|---|---|---|---|---|
| US 2011164105 | A1 | 07-07-2011 | NONE | | |
| US 2003117501 | A1 | 26-06-2003 | CN | 1427619 A | 02-07-2003 |
| | | | GB | 2384384 A | 23-07-2003 |
| | | | HK | 1054642 A1 | 10-02-2006 |
| | | | JP | 2003189168 A | 04-07-2003 |
| | | | US | 2003117501 A1 | 26-06-2003 |
| EP 2328018 | A1 | 01-06-2011 | EP | 2328018 A1 | 01-06-2011 |
| | | | ES | 2313860 A1 | 01-03-2009 |
| | | | JP | 2011530846 A | 22-12-2011 |
| | | | US | 2012008011 A1 | 12-01-2012 |
| | | | WO | 2010018287 A1 | 18-02-2010 |
| US 2008239061 | A1 | 02-10-2008 | EP | 2132932 A1 | 16-12-2009 |
| | | | JP | 2010524295 A | 15-07-2010 |
| | | | US | 2008239061 A1 | 02-10-2008 |
| | | | WO | 2008121236 A1 | 09-10-2008 |
| EP 1986431 | A2 | 29-10-2008 | CN | 101296356 A | 29-10-2008 |
| | | | EP | 1986431 A2 | 29-10-2008 |
| | | | KR | 20080095395 A | 29-10-2008 |
| | | | US | 2008268899 A1 | 30-10-2008 |
| EP 1246464 | A2 | 02-10-2002 | CN | 1378401 A | 06-11-2002 |
| | | | EP | 1246464 A2 | 02-10-2002 |
| | | | JP | 2002290793 A | 04-10-2002 |
| | | | KR | 20020077090 A | 11-10-2002 |
| | | | NO | 20021509 A | 30-09-2002 |
| | | | TW | M246925 U | 11-10-2004 |
| | | | US | 2002142798 A1 | 03-10-2002 |
| US 2009154692 | A1 | 18-06-2009 | JP | 2009147654 A | 02-07-2009 |
| | | | US | 2009154692 A1 | 18-06-2009 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007274462 A
- JP 2009147654 A
- JP 2003271167 A
- JP 2011199052 A